# EUROPEAN PATENT SPECIFICATION

(11) **EP 2 386 177 B1**
(45) Date of publication and mention of the grant of the patent: **02.09.2020**
(21) Application number: 10729279.9
(22) Date of filing: 05.01.2010
(51) Int. Cl.: H04W 48/16, H04W 80/04, H04W 36/00, H04L 29/06

(54) **VOICE COMMUNICATION BETWEEN USER EQUIPMENT AND NETWORK**
SPRACHKOMMUNIKATION ZWISCHEN EINER BENUTZERAUSSTATTUNG UND EINEM NETZWERK
COMMUNICATION VOCALE ENTRE UN ÉQUIPEMENT D'UTILISATEUR ET UN RÉSEAU

(30) Priority: 06.01.2009 GB 0900190
(43) Date of publication of application: 16.11.2011
(73) Proprietor: Samsung Electronics Co., Ltd., Suwon-si, Gyeonggi-do, 443-742 (KR)
(72) Inventor: ZISIMOPOULOS, Haris c/o Samsung Electronics Co.Ltd., Gyeonggi-do 442-742 (GB)
(74) Representative: Grünecker Patent- und Rechtsanwälte PartG mbB
(86) International application number: PCT/KR2010/000041
(87) International publication number: WO 2010/079937

(56) References cited:
- EP-A1- 1 875 748
- WO-A1-2006/114120
- WO-A1-2007/144029
- WO-A1-2008/046445
- WO-A1-2008/148432
- WO-A2-2007/092788
- US-A1- 2009 003 276
- "3GPP TS 23.206 V7.3.0 Voice Call Continuity (VCC) between Circuit Switched (CS) and IP Multimedia Subsystem (IMS)", INTERNET CITATION, March 2007 (2007-03), XP002460170, Retrieved from the Internet: URL:http://www.3gpp.org/ftp/Specs/archive/ 23_series/23.206/23206-730.zip [retrieved on 2007-11-28]

## Description

### Technical Field

This invention generally relates to methods of providing voice communication between user equipment (UE) and a communication network, and to UE adapted for use in such methods. Certain aspects of the invention are also concerned with communication systems in which the methods are implemented, computer programs for implementing the methods, and to storage media storing such programs.

### Background Art

A number of abbreviations will be used throughout this specification, and are identified in the following table.

### Table 1

### [Table1]

**[Table]**

| | |
|---|---|
| ADS | Access Domain Selection |
| AS | Application Server |
| CN | Core Network |
| CS | Circuit Switch |
| CSoEPS | CS over EPS |
| EPC | Enhanced Packet Core |
| EPS | Enhanced Packet System (For information: eNB + EPC = EPS) |
| HPLMN | Home PLMN |
| ICS | IMS Centralised Services |
| IMS | IP MultiMedia Subsystem |
| IP | Internet Protocol |
| IP-CAN | IP-Connectivity Access Network |
| LTE | Long Term Evolution (relate most to the Radio Access Network) |
| MSC-S | MSC Server |
| MGCF | Media Gateway Control Function |
| MME | Mobility Management Entity |
| MO | Mobile Originating |
| MT | Mobile Terminating |
| PLMN | Public Land Mobile Network |
| PS | Packet Switched |
| QoS | Quality of Service |
| QCI | QoS Class Identifier |
| SAE | System Architecture Evolution (relate most to the EPC) |
| SCC | Service Centralisation and Continuity |
| SRVCC | Single Radio VCC |
| T-ADS | Terminating ADS |
| UE | User Equipment |
| UMTS | Universal Mobile Telecommunications System |
| VCC | Voice Call Continuity |
| VoIP | Voice over IP |
| VoIMS | VoIP using IMS |
| VoIMSoLTE | VoIP using IMS over LTE |
| VPLMN | Visited PLMN |

The SAE/LTE system that is now currently being designed, specified and standardised by 3GPP is a PS (packet-switched) only system. This means there is no CS (circuit-switched) domain and the voice calls in that SAE/LTE system are "natively" through the PS domain only. Hence as the "default option" these voice calls will be VoIP calls and the underlying call control protocol will be SIP supported through IMS.

Nonetheless as part of rel.8 of 3GPP SAE and due to demands for different deployment scenarios in next generation networks, different "alternative voice delivery mechanisms" have been defined and co-exist as part of the 3GPP standards. These include:
- VoIP with CSoEPS: voice frames are delivered using PS transport for the delivery voice frames and CS signalling tunnelled to the CS infrastructure encapsulated in IP. This solution is defined in reference [5] (see references at end of description).
- CS fallback: which involves steering the UE to CS access in an appropriate CS-capable legacy network (e.g. GSM,UMTS, CDMA2000 1xRTT) when a voice call is about to be made or received. This solution is defined in reference [3].

As mentioned above these "alternative voice delivery mechanisms" exist on top of the "default option" which is:
- VoIP with IMS: VoIP delivered using PS access for the delivery of voice frames and IMS SIP for signalling.

Currently, which voice delivery mechanism is used for voice communication between UE and a network is determined by a static configuration of the UE (in other words, it is set or defined by operator policy). The UE will typically be configured to use a particular voice call mechanism for voice call communication with a network. This can lead to problems, particularly in roaming scenarios where the UE is moved (i.e. roams) from one network (e.g. a "home" network, or HPLMN) to another network (e.g. a "visited" network, VPLMN). For example, the VPLMN may not support the mechanism that the UE is configured to use in the HPLMN. Another way of looking at this problem is that different UEs may be configured to use different mechanisms for voice communication, as may different networks (which may be, or may comprise, access networks). This can lead to compatibility problems.

One possible solution is to adapt a particular communication network so that it can accommodate a variety of UE configurations, so as to be able to establish voice communications with a range of UEs roaming into its coverage area, those different UEs being adapted to use a range of different mechanisms. However, this is itself problematic, placing a burden on the network provider, and increasing complexity and cost.

WO2006/114120 A1 discloses a service routing decision entity for a system that comprises a circuit switched subsystem, an Internet protocol multimedia system, IMS, subsystem and at least one mobile terminal suitable for communication with the two subsystems. The two subsystems provide overlapping services. The service routing decision entity and method are arranged to make a routing decision associated with a given service involving the mobile terminal with respect to routing the given service via one or both of the circuit switched subsystem and the IMS subsystem, based on predetermined decision information.

US2009/0003276 A1 discloses introduction of a Terminated Access Domain Selection function into the UE (TADS-UE) for IMS Centralized Services ICS. This function supports the TADS-IMS function in the network to select the terminated access domain for both, the session control channel and the bearer channel carrying the media (media transport channel). The terminal acquires information about the capabilities of an access network in which the terminal is camping. Upon receiving, at the terminal, an invitation to participate in a call, the terminal analyzes the acquired information about the capabilities of the access network, and optionally or additionally of the IMS network. The terminal responds to the invitation, based on the result of the analyzing, with an indication that indicates a respective access domain to be used for at least one of the media channel and the session control channel of the incoming call.

Problems with the state of the art will now be discussed in more detail:
Current voice delivery techniques developed as part of the rel.8 work in 3GPP assume that the choice of the appropriate voice service delivery mechanism will be based on some static configuration in the UE.

The following example illustrates a problem with such current techniques, and illustrates limitations imposed in the roaming scenario:
An operator A has statically configured its UEs to use VoIMSoLTE and these UEs roam to VPLMN of operator B that does not primarily support VoIMSoLTE, rather another alternative voice delivery mechanism (e.g. CS fallback, CSoEPS). The UE of operator A needs to establish (UE-or NW-originated) a dedicated bearer in order to transport the SIP signalling to the home P-CSCF in addition to the default EPS bearer. After that, when it attempts to establish the voice call it will also require support for certain QoS for the voice to be transported. This requires support for certain QoS in the form of specific QCIs required for VoIP and, in the case of S8-PMIP, also support for PCC-roaming and PCC in the VPLMN. It will also require that the operator in the VPLMN will "open", with appropriate filters, the dedicated bearer for IMS traffic, although this operator may not use IMS for its own subscribers. In addition to that if the IMS UEs from operator A are also SR-VCC capable in order for SR-VCC handover to be provided the MME in the VPLMN needs to support SR-VCC handover procedures.

All this requires: quite a lot of features and procedures to be mandated in roaming agreements and it may not be workable in practice; investment in IMS-related functionality (such as PCC and SR-VCC), when the primary driver of an operator that does not want to invest in IMS is to minimise this investment; and static configuration in the UEs with un-defined (at the moment) mechanisms- i.e. there is no OMA DM MO that you can use to determine the appropriate voice mechanism.

### Disclosure of Invention

### Technical Problem

It is an aim of certain embodiments of the invention to solve, mitigate, or obviate, at least partly, at least one of the problems and/or disadvantages associated with the prior art.

### Solution to Problem

The invention is set out in the appended claims.

### Advantageous Effects of Invention

Advantageously, the UE is thus able to adapt to, and take into account, the capabilities of the network and make a selection (decision) itself as to which voice communication mechanism to use in the current circumstances. This provides significant advantages over prior art techniques in which the network was adapted to accommodate a variety of UEs that might roam into its coverage area.

### Brief Description of Drawings

Embodiments of the invention are further described hereinafter with reference to the accompanying drawings, in which:
Figure 1 is a flow chart illustrating steps in a method embodying the invention:
Figure 2 illustrates a step in a method embodying the invention;
Figure 3 illustrates steps step in a method embodying the invention;
Figure 4 illustrates steps step in a method embodying the invention;
Figure 5 illustrates steps performed in a method embodying the invention;
Figure 6 illustrates steps performed in a method embodying the invention;
Figure 7 illustrates steps performed in a method embodying the invention;
Figure 8 illustrates steps performed in a method embodying the invention; and
Figure 9 illustrates steps performed in a method embodying the invention.

### Best Mode for Carrying out the Invention

It will be appreciated that certain embodiments of the invention provide a dynamic selection procedure for voice delivery mechanism. Certain embodiments are concerned with the selection of appropriate voice delivery mechanism in user equipment (such as mobile phones, personal digital assistants etc.) in so-called next generation networks, such LTE or WiMAX.

As mentioned above, currently the voice delivery mechanism to be used by the UE relies on static configuration (operator policy). This is not adequate particularly in roaming scenarios.

In certain embodiments of the invention the UE is adapted to select the most appropriate voice delivery mechanism that is supported in the VPLMN rather than the HPLMN and various mechanisms can co-exist as part of the UE's capabilities.

Thus, embodiments of the invention are able to provide solutions to the roaming problem with a selection method (in contrast to the prior art techniques utilising UEs statically configured, according to local operator policy). Certain methods embodying the invention are implemented using IMS-capable UEs that are also capable of more than one other alternative voice delivery mechanism.

It will be appreciated that certain embodiments of the invention alleviate the problem of using a sub-optimal voice delivery mechanism when the IMS UE operates in a VPLMN where the voice delivery mechanism that is primarily supported in the HPLMN is not supported. They also avoids the requirement for an operator to support a minimum set of features in the network only in order to support roaming UEs. As a result, embodiments are able to minimize (or at least reduce) the cost incurred in the operator of the VPLMN in order to support these features.

In addition to the above, embodiments provide clear benefits to the handset manufacturer by allowing the co-existence of multiple voice delivery solution in a single terminal implementation, and avoiding the fragmentation imposed by providing different voice solutions for different deployments and markets (and avoiding the customization cost that is incurred as a result of that).

The combination of IMS Centralised Services and CS delivery mechanisms such as CS fallback and CSoEPS are investigated in the description below document, and embodiments of the invention are described which provide a solution to make the co-existence possible. Certain embodiments employ a novel decision method that the UE follows (implements) in order to select the most appropriate voice delivery mechanism in the VPLMN in which it operates.

Certain embodiments use a novel specific feature tag in the ICS registration indicating the support for "alternative voice delivery mechanism" notifying the relevant domain selection application server of the IMS domain (e.g. SCC AS) that "alternative voice delivery mechanism" is the selected mechanism in order to adapt the relevant domain selection (T-ADS). This is only applicable to the case where the ICS-capable UE does not support UE-assisted T-ADS or it is the operator's policy not to use UE-assisted T-ADS.

In certain embodiments (but not all), Pre-requisites/Basic assumptions are as follows:
- The UE and the network are EPS compliant
- The UE is IMS capable.
- The network in the VPLMN supports only alternative voice delivery mechanisms (i.e. CS fallback or CSoEPS) for the "home" UEs and is not using IMS for home services and any form of IMS roaming.
- The UE becomes aware of the fact that VoIP is not possible in the VPLMN (e.g. from the radio capabilities in the particular cell that is attached to). This can be performed using the mechanism described in reference [6]
- The UE is primarily using VoIMS when in the HPLMN- i.e. VoIMS is the primary choice for voice delivery in the HPLMN
- Support for ICS is not necessary in the UE and the network (i.e. MSC-S)

**Note:** Throughout this document we use the term "*alternative voice delivery mechanism"* in order to refer to the already specified solution of CS fallback [3]and CSoEPS [5] . Nevertheless, the scope of the invention is not limited to such mechanisms, and indeed can be extended to encompass any voice delivery mechanisms, e.g. any mechanisms that can co-exist with VoIMS in next generation handsets.

In certain methods embodying the invention, the UE is adapted to implement a selection method in order to select the most appropriate voice delivery mechanism using as inputs its own capabilities, the capabilities of the access network in the VPLMN and the (local)operator pre-configured policy.

Certain embodiments use a specific feature tag in the ICS registration indicating the support for "alternative voice delivery mechanism" notifying the relevant domain selection application server of the IMS domain (e.g. SCC AS) that "alternative voice delivery mechanism" is the selected mechanism in order to adapt the domain selection (e.g. T-ADS). This use of the specific feature tag is only applicable to the case where the ICS-capable UE does not support UE-assisted domain selection (T-ADS) or it is the operator's policy not to use UE-assisted domain selection (T-ADS).

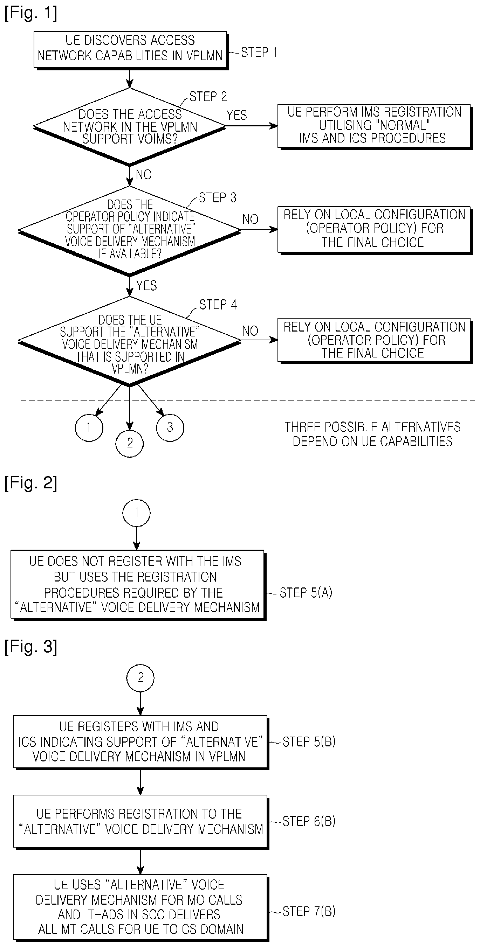

Referring now to fig. 1, a method embodying the invention comprises the following steps:
**Step 1:** The UE discovers the access network capabilities (i.e. communicates with the network to make a determination of which mechanisms it can use/support) in terms of voice delivery mechanisms in the VPLMN. This can be done using the mechanisms described in [6].
**Step 2:** If the access network capabilities in VPLMN indicate support for VoIMS then the UE performs IMS and ICS registration (if required) as described in [1]and [2]. If the access network capabilities in VPLMN do not indicate support for VoIMS rather they indicate support of an "alternative voice delivery mechanism" then the UE proceeds to step 3. If there is no support for any voice delivery mechanism the method terminates here and is indicated that no voice can supported in VPLMN.
**Step 3:** If the operator policy does not indicate the use of "alternative voice delivery mechanism" in the VPLMN then the UE proceeds with the indicated operator defined policy. If the operator policy does allow the use of "alternative voice delivery mechanism" in the VPLMN then the proceeds with step 4.
**Step 4:** If the UE does not support the "alternative voice delivery mechanism" that is supported in the VPLMN then static operator policy is performed (e.g. the UE attempts to use VoIMS even though the VPLMN does not support all the relevant features or it is indicated that voice is not supported in the VPLMN). If the UE does support the "alternative voice delivery mechanism" that is supported by the network in the VPLMN then three alternatives apply depending on the capabilities of the UE.

**Alternative 1** (as illustrated in fig. 2): If the UE is not required to support any other services apart from voice using IMS, or the UE does not have ICS capabilities, then the following steps apply:
**Step 5(a):** The UE does not perform IMS registration at all, or if it was registered to IMS before over a different access network, it de-registers, and initiates registration to the "alternative voice delivery mechanism" using the relevant procedures defined for that.

**Alternative 2** (as illustrated in fig. 3): If the UE is supporting ICS but is not supporting UE-assisted T-ADS or the operator policy is not to support UE-assisted T-ADS then the following steps apply:
**Step 5(b):** The UE performs IMS and ICS registration. In the ICS registration it indicates to the SCC AS the "alternative voice delivery mechanism" that is supported in the VPLMN. This can be indicated through the inclusion of a new "feature tag" that will need to be defined for that purpose.

**Step 6(b):** The UE performs registration to the "alternative voice delivery mechanism" using the relevant procedures defined there.

**Step 7(b):** The SCC AS uses the T-ADS to always deliver the voice service signalling to the CS domain. As a result the MT are always breaking out of the IMS to the MGCF and reach the UE through the MSC-S in the VPLMN. For the MO calls the UE uses the relevant MO procedures defined for the relevant "alternative voice delivery mechanism".

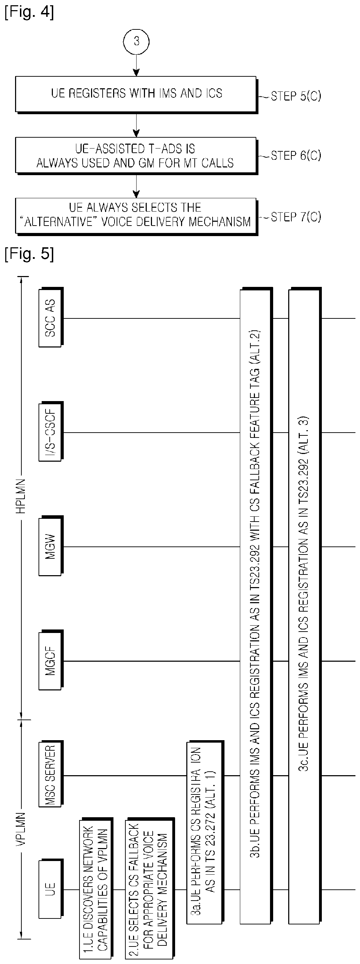

**Alternative 3** (as illustrated in fig. 4): If the UE is supporting ICS and is supporting UE-assisted T-ADS and the operator policy is to support UE-assisted T-ADS then the following steps apply:
**Step 5(c):** The UE performs IMS and ICS registration as normal (i.e. no need for any specific feature tag).

**Step 6(c):** UE-assisted T-ADS is always used, hence the Gm interface as defined in [1] and following the appropriate procedures defined in [2].

**Step 7(c):** The UE through the UE-assisted T-ADS always selects the "alternative voice delivery mechanism" for MO and MT calls.

### • Further embodiments

The following section describes embodiments of this invention with the usage of CS fallback as defined in [3].

**Alternative 1 (as illustrated in** **fig. 5****):** *The ICS UE does not register with IMS when it moves in CS fallback IP-CAN, the ICS procedures for non ICS UEs are followed*

In this alternative the ICS UE, when it moves to an IP-CAN that supports CS fallback but does not support VoIP, does not register with IMS (or if it is registered it de-registers) and follows procedures similar to the ones described in ICS [2] for non-ICS UEs. Effectively in this alternative the voice calls for this UE can still be centralised in the IMS in the HPLMN using the procedures for non-ICS UEs.

When the UE moves to an IP-CAN in the VPLMN that can supports VoIP or can use CS bearers by default (e.g. HSPA UTRAN) then it can re-register to the IMS indicating that audio can be supported and normal T-ADS procedures to be followed from there on.

To summarise the requirements derived from this alternative are:
- The ICS UE does not register with IMS for voice services (if it is already registered it de-registers)
- The MSC or MSC-S registers to the IMS and SCC AS on behalf of the UE using I2
- The SCC AS uses T-ADS to terminate all voice sessions to CS media for this particular UE, using ICS procedures applicable to non-ICS UEs and legacy MSC or MSC-S
- The ICS UE always uses CS bearers and CS fallback procedures to setup the voice calls as long as it is in an IP-CAN that supports CS fallback.

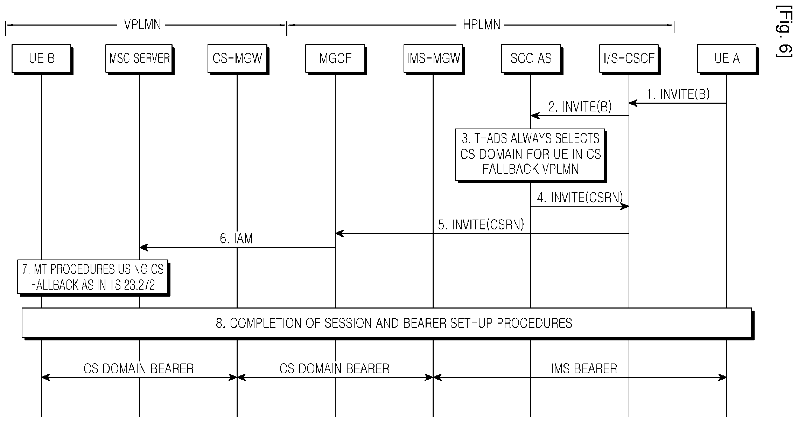

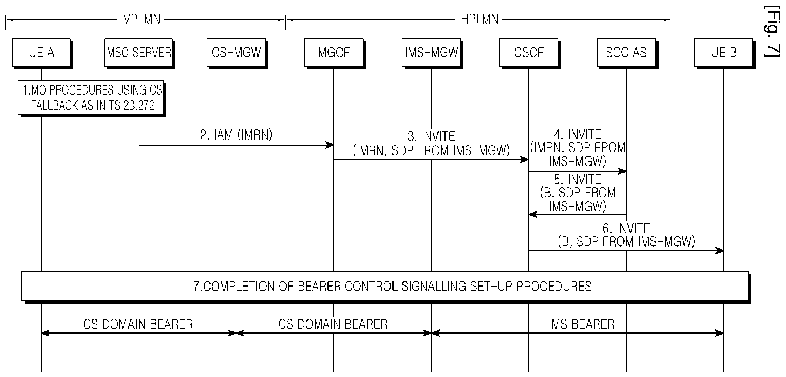

**Alternative 2 (as illustrated in** **figs. 6** **and** **7****):** *The ICS UE registers with IMS using Gm indicating CS fallback network capabilities, the network uses T-ADS to send all incoming voice calls to CS for the UE and the UE uses MO CS fallback procedures for outgoing calls*

In this alternative the UE indicates upon IMS registration using Gm that the VPLMN IP-CAN that has attached to is CS fallback capable. This can be for example with the use of a particular feature tag used in the SIP REGISTER request or the indication that audio is not supported in its UA Caps. The SCC AS then uses this information as an input to the T-ADS and always terminates all the incoming voice calls to CS. The MSC then uses the normal CS fallback paging procedure in order to deliver the voice call over 2G/3G.

For the MO (mobile originating) procedures the UE uses the CS fallback MO procedures in order to perform the call, but the call is routed through the IMS as in the case of ICS UEs using CS for call establishment and a legacy MSC or MSC-S not enhanced for ICS. The MSC in this case using IN mechanisms fetches the UE's IMRN and routes the request to the UE's home network IMS.

When the ICS UE moves over to an IP-CAN that supports VoIP in the VPLMN or it can support CS by default (e.g. HSPA UTRAN) then it can re-register to the IMS indicating this time that audio is supported and/or that CS fallback is not the preferred option.

To summarise the requirements derived from this alternative are:
- The ICS UE indicates to the IMS upon IMS registration that the VPLMN supports CS fallback and/or CS fallback is the preferred option to deliver voice
- The SCC AS uses T-ADS to terminate all voice sessions to CS media for this particular UE, using ICS procedures applicable to non-ICS UEs and legacy MSC or MSC-S
- The ICS UE always uses CS bearers and CS fallback procedures to setup the voice calls as long as it is in an IP-CAN that supports CS fallback.

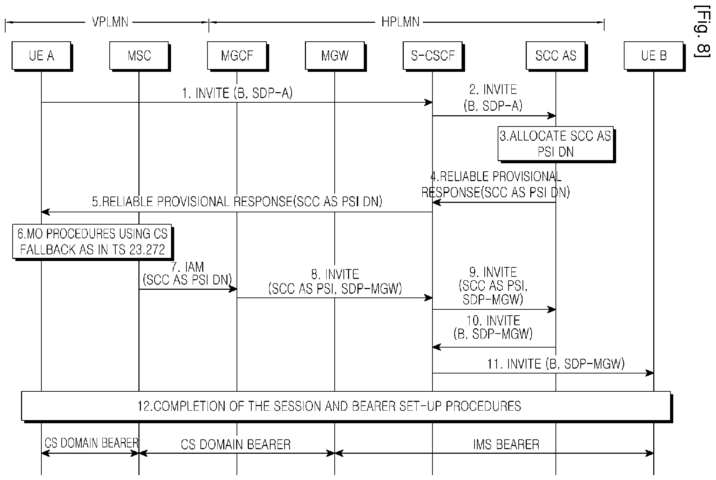

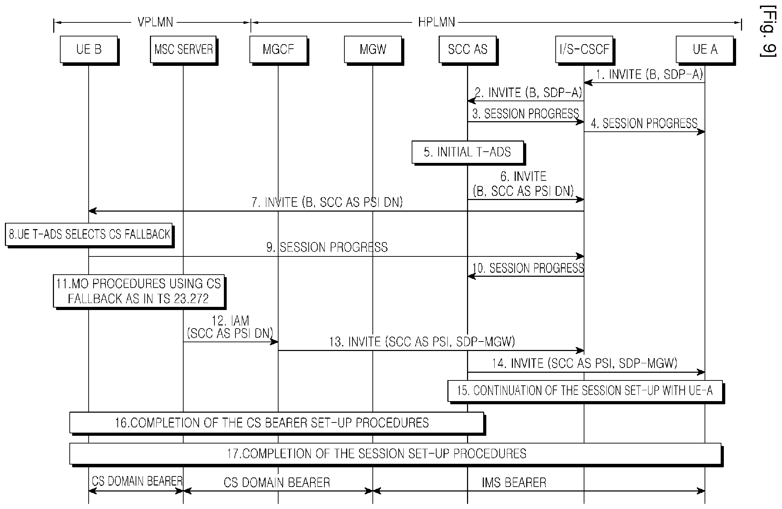

**Alternative 3 (as illustrated in** **figs. 8** **and** 9):*The ICS UE registers with IMS following normal IMS registration procedures using the Gm, UE-Assisted domain mechanisms are used for MT and MO calls for CS fallback.*

In this alternative the UE uses Gm over the IP-CAN that supports CS fallback and not VoIP in order register with IMS following the normal registration procedures for an ICS UE.

For the MO calls the UE always selects the CS media and in respect the CS fallback MO procedures even though it uses the Gm as the signalling to perform the voice calls. An example of MO call for this alternative is shown in 8.

For MT calls the UE assisted T-ADS mechanisms are used and the UE when in an IP-CAN that supports CS fallback but not VoIP always selects CS media and sets up the voice call following MO procedures for CS fallback. The flow is indicated in 9.

When the UE moves to an IP-CAN in the VPLMN that can supports VoIP or can use CS bearers by default (e.g. HSPA UTRAN) then it can re-register to the IMS indicating that audio can be supported and normal T-ADS procedures to be followed from there on.

To summarise the requirements derived from this alternative are:
- The ICS UE registers with IMS and SCC AS for voice services using Gm as normal
- The SCC AS uses initial T-ADS to signal the incoming voice calls using Gm
- The ICS UE uses T-ADS to setup the voice call with CS media using MO CS fallback procedures
- The ICS UE always uses Gm in order to signal the outgoing voice call and uses CS media established using MO CS fallback procedures

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing a system or method as claimed in any one of the claims of this specification and a machine-readable storage storing such a program. Still further, such programs may be conveyed electronically via any medium such as a communication signal carried over a wired or wireless connection and embodiments suitably encompass the same.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive.

In particular, documents referred to explicitly in the above description are as follows:
[1] 3GPP TS 23.228, "IP Multimedia Subsystem (IMS); Stage 2"
[2] 3GPP TS 23.292, "IP Multimedia Subsystem (IMS) Centralized Services; Stage 2"
[3] 3GPP TS 23.272, "Circuit Switched (CS) fallback in Evolved Packet System (EPS); Stage 2"
[4] 3GPP TS 23.401, "General Packet Radio Service (GPRS) enhancements for Evolved Universal Terrestrial Radio Access Network (E-UTRAN) access"
[5] 3GPP TR 23.879, "Study on Circuit Switched (CS) domain services over evolved Packet Switched (PS) access"
[6] GB 6000410.5, Samsung GB patent application on advertising VoIP n

## Claims

1. A user equipment, UE, for a voice call service in a communication system, wherein:
the UE is configured to communicate with a communication network to determine if the communication network is capable of servicing a voice call in a packet-switched, PS, domain or not, and to service the voice call with the communication network in the PS domain if the communication network is capable of servicing the voice call in the PS domain, wherein the PS domain is an Internet Protocol, IP, Multimedia Subsystem, IMS, domain; and wherein the UE is configured to use a specific tag in an IMS Centralized Services, ICS, registration for indicating support for an alternative voice delivery mechanism and for notifying a relevant domain selection application server of the IMS domain of the UE selection of an alternative voice delivery mechanism in order to adapt a Terminating Access Domain Selection, T-ADS, in response to a ICS-capable UE not being configured to support UE-assisted T-ADS or in response to an operator's policy configured not to allow the use of UE-assisted T-ADS;
wherein the UE is configured to communicate with the communication network to determine if the communication network is configured to use
a Voice over IP, VoIP, of the IMS domain or not;
wherein the UE is configured to determine whether an operator policy of the communication network allows at least one alternative voice delivery mechanism or not, if the communication network is not configured to use the VolP of the IMS domain;
wherein the UE is configured to service the voice call with the communication network using the at least one alternative voice delivery mechanism if the operator policy of the communication network allows the at least one alternative voice delivery mechanism;
wherein the at least one alternative voice delivery mechanism includes at least one of a circuit-switched, CS, fallback mechanism and a VolP with CS over enhanced packet system, EPS, mechanism; and
wherein the VolP with CS over EPS mechanism comprises a mechanism where voice frames are delivered using the IMS domain and CS signaling is encapsulated in IP.

2. The UE claimed in claim 1, wherein if the communication network is incapable of servicing the voice call in the PS domain, the UE is configured to communicate with the communication network to determine whether the communication network is capable of servicing the voice call in a Circuit-Switched, CS, domain or not.

3. The UE as claimed in claim 2, wherein the UE is configured to service the voice call with the communication network in the CS domain if the communication network is capable of servicing the voice call in the CS domain.

4. A communication network for a voice call service in a communication system, wherein:
the communication network is configured to communicate with a user equipment, UE, and to service the voice call in a packet-switched, PS, domain or a circuit-switched, CS, domain,
wherein the PS domain is an Internet Protocol, IP, Multimedia Subsystem, IMS, domain;
wherein the communication network is configured to use an operator policy allowing for at least one alternative voice delivery mechanism if the communication network is not configured to use a Voice over IP, VoIP, of the IMS domain;
wherein an IMS Centralized Services, ICS, registration contains a specific tag for indicating support of the at least one alternative voice delivery mechanism and is configured to notify a relevant domain selection application server of the IMS domain of the UE selection of an alternative voice delivery mechanism in order to adapt a Terminating Access Domain Selection, T-ADS, in response to a ICS-capable UE not being configured to support UE-assisted T-ADS or in response to an operator's policy configured not to allow the use of UE-assisted T-ADS;
wherein the communication network is configured to service the voice call with the UE using the at least one alternative voice delivery mechanism;
wherein the at least one alternative voice delivery mechanism includes at least one of a circuit-switched, CS, fallback mechanism and a VolP with CS over enhanced packet system, EPS, mechanism; and
wherein the VolP with CS over EPS mechanism comprises a mechanism where voice frames are delivered using the IMS domain and CS signaling is encapsulated in IP.

5. A method of servicing a voice call by a user equipment, UE, in a communication system, comprising the steps of:
communicating with a communication network to determine if the communication network is capable of servicing the voice call in a packet-switched, PS, domain or not;
servicing the voice call with the communication network in the PS domain if the communication network is capable of servicing the voice call in the PS domain, wherein the PS domain is an Internet Protocol, IP, Multimedia Subsystem, IMS, domain;
indicating support for an alternative voice delivery mechanism by using a specific tag in an IMS Centralised Services, ICS, registration notifying a relevant domain selection application server of the IMS domain that alternative voice delivery mechanism is selected by the UE in order to adapt a Terminating Access Domain Selection, T-ADS, in case where a ICS-capable UE does not support UE-assisted T-ADS or it is an operator's policy not to use UE-assisted T-ADS;
communicating with the communication network to determine if the communication network uses a Voice over IP, VoIP, of the IMS domain or not;
determining whether an operator policy of the communication network allows at least one alternative voice delivery mechanism or not, if the communication network does not use the VolP of the IMS domain; and
servicing the voice call with the communication network using the at least one alternative voice delivery mechanism if the operator policy of the communication network allows the at least one alternative voice delivery mechanism;
wherein the at least one alternative voice delivery mechanism includes at least one of a circuit-switched, CS, fallback mechanism and a VolP with CS over enhanced packet system, EPS, mechanism, and
wherein the VolP with CS over EPS mechanism comprises a mechanism where voice frames are delivered using the IMS domain and CS signaling is encapsulated in IP.

6. The method claimed in claim 5, further comprising the step of, if the communication network is incapable of servicing the voice call in the PS domain, communicating with the communication network to determine whether the communication network is capable of servicing the voice call in a Circuit-Switched, CS, domain or not.

7. The method as claimed in claim 5, further comprising the step of servicing the voice call with the communication network in the CS domain if the communication network is capable of servicing the voice call in the CS domain.

8. A method of servicing a voice call service by a communication network in a communication system, comprising the steps of:
communicating with a user equipment, UE; and
servicing the voice call in a packet-switched, PS, domain or a circuit-switched, CS, domain,
wherein the PS domain is an Internet Protocol, IP, Multimedia Subsystem, IMS, domain;
wherein the communication network uses an operator policy allowing for at least one alternative voice delivery mechanism if the communication network does not use a Voice over IP, VoIP, of the IMS domain;
wherein supporting of the at least one alternative voice delivery mechanism is indicated by a specific tag in an IMS Centralised Services, ICS, registration notifying a relevant domain selection application server of the IMS domain that alternative voice delivery mechanism is selected by the UE in order to adapt a Terminating Access Domain Selection, T-ADS, in case where a ICS-capable UE does not support UE-assisted T-ADS or it is an operator's policy not to use UE-assisted T-ADS;
wherein the communication network services the voice call with the UE using the at least one alternative voice delivery mechanism;
wherein the alternative voice delivery mechanism includes at least one of a circuit-switched, CS, fallback mechanism and a VolP with CS over enhanced packet system, EPS, mechanism; and
wherein the VoIP with CS over EPS mechanism comprises a mechanism where voice frames are delivered using the IMS domain and CS signaling is encapsulated in IP.

## Patentansprüche

1. Benutzereinrichtung, UE, für einen Sprachanrufdienst in einem Kommunikationssystem, wobei:
die UE ausgebildet ist, mit einem Kommunikationsnetzwerk zu kommunizieren, um zu ermitteln, ob das Kommunikationsnetzwerk in der Lage ist, einen Sprachanruf in einem Paket vermittelten, PS, Bereich abzuarbeiten oder nicht, und ferner ausgebildet ist, den Sprachanruf mit dem Kommunikationsnetzwerk in dem PS-Bereich abzuarbeiten, wenn das Kommunikationsnetzwerk in der Lage ist, den Sprachanruf in dem PS-Bereich abzuarbeiten, wobei der PS-Bereich ein Internetprotokoll-, IP-, Multimedia Subsystem-, IMS-, Bereich ist;
und wobei die UE ausgebildet ist, eine spezielle Marke in einer Registrierung für zentralisierte IMS-Dienste zu verwenden, um eine Unterstützung für einen alternativen Sprachbereitstellungsmechanismus anzugeben und einen relevanten Bereichsauswahlanwendungsserver des IMS-Bereichs der UE-Auswahl eines alternativen Sprachbereitstellungsmechanismus zu benachrichtigen, um eine terminierende Zugriffsbereichsauswahl, T-ADS, in Reaktion darauf anzupassen, dass eine ICS-fähige UE nicht ausgebildet ist, eine UE-unterstützte T-ADS zu unterstützen, oder in Reaktion darauf, dass ein Regelwerk eines Betreibers so gestaltet ist, dass die Verwendung einer UE-unterstützten T-ADS nicht erlaubt ist;
wobei die UE ausgebildet ist, mit dem Kommunikationsnetzwerk zu kommunizieren, um zu ermitteln, ob das Kommunikationsnetzwerk ausgebildet ist, Sprache über IP, VoIP, des IMS-Bereichs zu verwenden oder nicht;
wobei die UE ausgebildet ist zu ermitteln, ob ein Regelwerk eines Betreibers des Kommunikationsnetzwerks mindestens einen alternativen Sprachbereitstellungsmechanismus erlaubt oder nicht, wenn das Kommunikationsnetzwerk nicht ausgebildet ist, VolP des IMS-Bereichs zu verwenden;
wobei die UE ausgebildet ist, den Sprachanruf mit dem Kommunikationsnetzwerk unter Anwendung des mindestens einen alternativen Sprachbereitstellungsmechanismus abzuarbeiten, wenn das Regelwerk des Betreibers des Kommunikationsnetzwerks den mindestens einen alternativen Sprachbereitstellungsmechanismus erlaubt;
wobei der mindestens eine alternative Sprachbereitstellungsmechanismus einen durch Schaltung vermittelnden, CS, Notfallmechanismus und/oder VolP mit CS über erweiterten Paketsystem-, EPS-, Mechanismus enthält; und
wobei VolP mit CS über EPS-Mechanismus einen Mechanismus umfasst, in welchem Sprachsignalblöcke unter Anwendung des IMS-Bereichs bereitgestellt werden und CS-Signalisierung im IP gekapselt ist.

2. UE nach Anspruch 1, wobei, wenn das Kommunikationsnetzwerk nicht in der Lage ist, den Sprachanruf in dem PS-Bereich abzuarbeiten, die UE ausgebildet ist, mit dem Kommunikationsnetzwerk zu kommunizieren, um zu ermitteln, ob das Kommunikationsnetzwerk in der Lage ist, den Sprachanruf in einem durch Schaltung vermittelnden, CS, Bereich abzuarbeiten oder nicht.

3. UE nach Anspruch 2, wobei die UE ausgebildet ist, den Sprachanruf mit dem Kommunikationsnetzwerk in dem CS-Bereich abzuarbeiten, wenn das Kommunikationsnetzwerk in der Lage ist, den Sprachanruf in dem CS-Bereich abzuarbeiten.

4. Kommunikationsnetzwerk für einen Sprachanrufdienst in einem Kommunikationssystem, wobei:
das Kommunikationsnetzwerk ausgebildet ist, mit einer Benutzereinrichtung, UE, zu kommunizieren und den Sprachanruf in einem durch Pakete vermittelnden, PS-, Bereich oder einem durch Schaltung vermittelnden, CS, Bereich abzuarbeiten,
wobei der PS-Bereich ein Internetprotokoll-, IP-, Multimedia Subsystem-, IMS-, Bereich ist;
wobei das Kommunikationsnetzwerk ausgebildet ist, ein Regelwerk des Betreibers zu verwenden, so dass mindestens ein alternativer Sprachbereitstellungsmechanismus erlaubt ist, wenn das Kommunikationsnetzwerk nicht ausgebildet ist, Sprache über IP, VoIP, des IMS-Bereichs zu verwenden;
wobei eine Registrierung für zentralisierte IMS-Dienste eine spezielle Marke enthält, um anzugeben, dass eine Unterstützung des mindestens einen alternativen Sprachbereitstellungsmechanismus gegeben ist, und ausgebildet ist, einen relevanten Bereichsauswahlanwendungsserver des IMS-Bereichs der UE-Auswahl eines alternativen Sprachbereitstellungsmechanismus zu benachrichtigen, um eine terminierende Zugriffsbereichsauswahl, T-ADS, in Reaktion darauf anzupassen, dass eine ICS-fähige UE nicht ausgebildet ist, eine UE-unterstützte T-ADS zu unterstützen, oder in Reaktion darauf, dass ein Regelwerk eines Betreibers nicht so gestaltet ist, dass die Verwendung einer UE-unterstützten T-ADS erlaubt ist;
wobei das Kommunikationsnetzwerk ausgebildet ist, den Sprachanruf mit der UE unter Anwendung des mindestens einen alternativen Sprachbereitstellungsmechanismus abzuarbeiten;
wobei der mindestens eine alternative Sprachbereitstellungsmechanismus einen durch Schaltung vermittelnden, CS, Notfallmechanismus und/oder VolP mit CS über erweiterten Paketsystem-, EPS-, Mechanismus enthält; und
wobei VolP mit CS über EPS-Mechanismus einen Mechanismus umfasst, in welchem Sprachsignalblöcke unter Anwendung des IMS-Bereichs bereitgestellt werden und CS-Signalisierung im IP gekapselt ist.

5. Verfahren zur Abarbeitung eines Sprachanrufs durch eine Benutzereinrichtung, UE, in einem Kommunikationssystem, mit den Schritten:
Kommunizieren mit einem Kommunikationsnetzwerk, um zu ermitteln, ob das Kommunikationsnetzwerk in der Lage ist, den Sprachanruf in einem Paket vermittelnden, PS, Bereich abzuarbeiten oder nicht;
Abarbeiten des Sprachanrufs mit dem Kommunikationsnetzwerk in dem PS-Bereich, wenn das Kommunikationsnetzwerk in der Lage ist, den Sprachanruf in dem PS-Bereich abzuarbeiten, wobei der PS-Bereich ein Internetprotokoll-, IP-, Multimedia Subsystem-, IMS-, Bereich ist;
Anzeigen einer Unterstützung für einen alternativen Sprachbereitstellungsmechanismus durch Verwendung einer speziellen Marke in einer Registrierung für IMS-zentralisierte Dienste, ICS, die einen relevanten Bereichsauswahlanwendungsserver des IMS-Bereichs darüber benachrichtigt, dass der alternative Sprachbereitstellungsmechanismus durch die UE ausgewählt wird, um eine terminierende Zugriffsbereichsauswahl, T-ADS, für den Fall anzupassen, in welchem eine ICS-fähige UE eine UE-unterstützte T-ADS nicht unterstützt, oder es eine Regel eines Betreibers gibt, eine UE-unterstützte T-ADS nicht zu verwenden;
Kommunizieren mit dem Kommunikationsnetzwerk, um zu ermitteln, ob das Kommunikationsnetzwerk Sprache über IP, VoIP, des IMS-Bereichs verwendet oder nicht;
Ermitteln, ob ein Regelwerk eines Betreibers des Kommunikationsnetzwerks mindestens einen alternativen Sprachbereitstellungsmechanismus erlaubt oder nicht, wenn das Kommunikationsnetzwerk VolP des IMS-Bereichs nicht verwendet; und
Abarbeiten des Sprachanrufs mit dem Kommunikationsnetzwerk unter Anwendung des mindestens einen alternativen Sprachbereitstellungsmechanismus, wenn das Regelwerk des Betreibers des Kommunikationsnetzwerks den mindestens einen alternativen Sprachbereitstellungsmechanismus erlaubt;
wobei der mindestens eine alternative Sprachbereitstellungsmechanismus einen durch Schaltung vermittelnden, CS, Notfallmechanismus und/oder VolP mit CS über einen erweiterten Paketsystem-, EPS-, Mechanismus enthält, und
wobei VolP mit CS über EPS-Mechanismus einen Mechanismus umfasst, in welchem Sprachsignalblöcke unter Anwendung des IMS-Bereichs bereitgestellt werden und eine CS-Signalisierung im IP gekapselt ist.

6. Verfahren nach Anspruch 5, das ferner umfasst: wenn das Kommunikationsnetzwerk nicht in der Lage ist, den Sprachanruf in dem PS-Bereich zu bearbeiten, Kommunizieren mit dem Kommunikationsnetzwerk, um zu ermitteln, ob das Kommunikationsnetzwerk in der Lage ist, den Sprachanruf in einem durch Schaltung vermittelnden, CS, Bereich abzuarbeiten oder nicht.

7. Verfahren nach Anspruch 5, das ferner den Schritt umfasst: Abarbeiten des Sprachanrufs mit dem Kommunikationsnetzwerk in dem CS-Bereich, wenn das Kommunikationsnetzwerk in der Lage ist, den Sprachanruf in dem CS-Bereich abzuarbeiten.

8. Verfahren zur Abarbeitung für einen Sprachanrufdienst durch ein Kommunikationsnetzwerk in einem Kommunikationssystem, mit den Schritten:
Kommunizieren mit einer Benutzereinrichtung, UE; und
Abarbeiten des Sprachanrufs in einem durch Paket vermittelnden, PS, Bereich oder einen durch Schaltung vermittelnden, CS, Bereich,
wobei der PS-Bereich ein Internetprotokoll-, IP-, Multimedia Subsystem-, IMS-, Bereich ist;
wobei das Kommunikationsnetzwerk ein Regelwerk eines Betreibers verwendet, das mindestens einen alternativen Sprachbereitstellungsmechanismus erlaubt, wenn das Kommunikationsnetzwerk Sprache über IP, VoIP, des IMS-Bereichs nicht verwendet;
wobei Unterstützung für den mindestens einen alternativen Sprachbereitstellungsmechanismus durch eine spezielle Marke in einer Registrierung von IMS-zentralisierten Diensten, ICS, angegeben wird, die einen relevanten Bereichsauswahlanwendungsserver des IMS-Bereichs darüber benachrichtigt, dass ein alternativer Sprachbereitstellungsmechanismus durch die UE ausgewählt wird, um eine terminierende Zugriffsbereichsauswahl, T-ADS, in dem Falle anzupassen, in welchem eine ICS-fähige UE eine UE-unterstützte T-ADS nicht unterstützt, oder wenn ein Regelwerk eines Betreibers vorgibt, eine UE-unterstützte T-ADS nicht zu verwenden;
wobei das Kommunikationsnetzwerk den Sprachanruf mit der UE unter Anwendung des mindestens einen alternativen Sprachbereitstellungsmechanismus abarbeitet;
wobei der alternative Sprachbereitstellungsmechanismus einen durch Schaltung vermittelnden, CS, Notfallmechanismus und/oder VolP mit CS über erweiterten Paketsystem-, EPS-, Mechanismus enthält; und
wobei VolP mit CS über EPS-Mechanismus einen Mechanismus umfasst, in welchem Sprachsignalblöcke unter Anwendung des IMS-Bereichs bereitgestellt werden und CS-Signalisierung im IP gekapselt ist.

## Revendications

1. Équipement utilisateur, UE, pour un service d'appel vocal dans un système de communication, dans lequel :
l'UE est configuré pour communiquer avec un réseau de communication pour déterminer si le réseau de communication est capable ou non de traiter un appel vocal dans un domaine à commutation de paquets, PS, et pour traiter l'appel vocal avec le réseau de communication dans le domaine PS si le réseau de communication est capable de traiter l'appel vocal dans le domaine PS, dans lequel le domaine PS est un domaine de Sous-Système Multimédia, IMS, à Protocole Internet, IP,
et dans lequel l'UE est configuré pour utiliser une étiquette spécifique dans un enregistrement de Services Centralisés IMS, ICS, pour indiquer une prise en charge d'un mécanisme de distribution vocale alternatif et pour notifier un serveur d'application de sélection de domaine pertinent du domaine IMS de la sélection UE d'un mécanisme de distribution vocale alternatif afin d'adapter une Sélection de Domaine d'Accès de Terminaison, T-ADS, en réponse à un UE capable de ICS qui n'est pas configuré pour prendre en charge une T-ADS assistée par UE ou en réponse à une politique d'opérateur configurée pour ne pas autoriser l'utilisation d'une T-ADS assistée par UE ; dans lequel l'UE est configuré pour communiquer avec le réseau de communication pour déterminer si le réseau de communication est configuré pour utiliser une Voix sur IP, VoIP, du domaine IMS ou non ;
dans lequel l'UE est configuré pour déterminer si une politique d'opérateur du réseau de communication autorise ou non au moins un mécanisme de distribution vocale alternatif, si le réseau de communication n'est pas configuré pour utiliser la VoIP du domaine IMS ;
dans lequel l'UE est configuré pour traiter l'appel vocal avec le réseau de communication utilisant le au moins un mécanisme de distribution vocale alternatif si la politique d'opérateur du réseau de communication autorise le au moins un mécanisme de distribution vocale alternatif ;
dans lequel le au moins un mécanisme de distribution vocale alternatif comprend au moins un mécanisme de secours, CS, à commutation de circuits et un mécanisme VolP avec CS sur système de paquets amélioré, EPS ; et
dans lequel le mécanisme VolP avec CS sur EPS comprend un mécanisme où des trames vocales sont délivrées en utilisant le domaine IMS et une signalisation CS est encapsulée dans un IP.

2. UE selon la revendication 1, dans lequel si le réseau de communication est incapable de traiter l'appel vocal dans le domaine PS, l'UE est configuré pour communiquer avec le réseau de communication pour déterminer si le réseau de communication est capable ou non de traiter l'appel vocal dans un domaine à commutation de circuits, CS.

3. UE selon la revendication 2, dans lequel l'UE est configuré pour traiter l'appel vocal avec le réseau de communication dans le domaine CS si le réseau de communication est capable de traiter l'appel vocal dans le domaine CS.

4. Réseau de communication pour un service d'appel vocal dans un système de communication, dans lequel :
le réseau de communication est configuré pour communiquer avec un équipement utilisateur, UE, et pour traiter l'appel vocal dans un domaine à commutation de paquets, PS, ou dans un domaine à commutation de circuits, CS,
dans lequel le domaine PS est un domaine de Sous-Système Multimédia, IMS, à Protocole Internet, IP,
dans lequel le réseau de communication est configuré pour utiliser une politique d'opérateur permettant au moins un mécanisme de distribution vocale alternatif si le réseau de communication n'est pas configuré pour utiliser une Voix sur IP, VoIP, du domaine IMS ;
dans lequel un enregistrement de Services Centralisés IMS, ICS, contient une étiquette spécifique pour indiquer une prise en charge du au moins un mécanisme de distribution vocale alternatif et est configuré pour notifier un serveur d'application de sélection de domaine pertinent du domaine IMS de la sélection UE d'un mécanisme de distribution vocale alternatif afin d'adapter une Sélection de Domaine d'Accès de Terminaison, T-ADS, en réponse à un UE capable de ICS non configuré pour prendre en charge une T-ADS assistée par UE ou en réponse à une politique d'opérateur configurée pour ne pas autoriser l'utilisation d'une T-ADS assistée par UE ;
dans lequel le réseau de communication est configuré pour traiter l'appel vocal avec l'UE en utilisant le au moins un mécanisme de distribution vocale alternatif ;
dans lequel le au moins un mécanisme de distribution vocale alternatif comprend au moins un mécanisme de secours à commutation de circuits, CS, et un mécanisme VolP avec CS sur un système de paquets amélioré, EPS ; et
dans lequel le mécanisme VolP avec CS sur EPS comprend un mécanisme où des trames vocales sont délivrées en utilisant le domaine IMS et une signalisation CS est encapsulée dans un IP.

5. Procédé de traitement d'un appel vocal par un équipement utilisateur, UE, dans un système de communication, comprenant les étapes consistant à :
communiquer avec un réseau de communication pour déterminer si le réseau de communication est capable ou non de traiter l'appel vocal dans un domaine à commutation de paquets, PS ;
traiter l'appel vocal avec le réseau de communication dans le domaine PS si le réseau de communication est capable de traiter l'appel vocal dans le domaine PS, dans lequel le domaine PS est un domaine de Sous-Système Multimédia, IMS, à Protocole Internet, IP ;
indiquer une prise en charge d'un mécanisme de distribution vocale alternatif en utilisant une étiquette spécifique dans un enregistrement de Services Centralisés IMS, ICS, notifiant à un serveur d'application de sélection de domaine pertinent du domaine IMS qu'un mécanisme de distribution vocale alternatif est sélectionné par l'UE afin d'adapter une Sélection de Domaine d'Accès de Terminaison, T-ADS, dans un cas où un UE capable de ICS ne prend pas en charge une T-ADS assistée par UE ou que c'est une politique d'opérateur de ne pas utiliser une T-ADS assistée par UE ;
communiquer avec le réseau de communication pour déterminer si le réseau de communication utilise ou non une Voix sur IP, VoIP, du domaine IMS ;
déterminer si une politique d'opérateur du réseau de communication permet ou non au moins un mécanisme de distribution vocale alternatif, si le réseau de communication n'utilise pas la VolP du domaine IMS ; et
traiter l'appel vocal avec le réseau de communication en utilisant le au moins un mécanisme de distribution vocale alternatif si la politique d'opérateur du réseau de communication autorise le au moins un mécanisme de distribution vocale alternatif ;
dans lequel le au moins un mécanisme de distribution vocale alternatif comprend au moins l'un parmi un mécanisme de secours à commutation de circuits, CS, et un mécanisme de VolP avec CS sur un système de paquets amélioré, EPS, et
dans lequel le mécanisme de VolP avec CS sur EPS comprend un mécanisme où des trames vocales sont délivrées en utilisant le domaine IMS et une signalisation CS est encapsulée dans IP.

6. Procédé selon la revendication 5, comprenant en outre l'étape consistant à, si le réseau de communication est incapable de traiter l'appel vocal dans le domaine PS, communiquer avec le réseau de communication pour déterminer si le réseau de communication est capable de traiter l'appel vocal dans un domaine à commutation de circuits, CS, ou non.

7. Procédé selon la revendication 5, comprenant en outre l'étape de traitement de l'appel vocal avec le réseau de communication dans le domaine CS si le réseau de communication est capable de traiter l'appel vocal dans le domaine CS.

8. Procédé de traitement d'un service d'appel vocal par un réseau de communication dans un système de communication, comprenant les étapes consistant à :
communiquer avec un équipement utilisateur, UE ; et
traiter l'appel vocal dans un domaine à commutation de paquets, PS, ou un domaine à commutation de circuits, CS,
dans lequel le domaine PS est un domaine de Sous-Système Multimédia, IMS, à Protocole Internet, IP ;
dans lequel le réseau de communication utilise une politique d'opérateur permettant au moins un mécanisme de distribution vocale alternatif si le réseau de communication n'utilise pas une Voix sur IP, VoIP, du domaine IMS ;
dans lequel une prise en charge du au moins un mécanisme de distribution vocale alternatif est indiquée par une étiquette spécifique dans un enregistrement de Services Centralisés IMS, ICS, notifiant à un serveur d'application de sélection de domaine du domaine IMS qu'un mécanisme de distribution vocale alternatif est sélectionné par l'UE afin d'adapter une Sélection de Domaine d'Accès de Terminaison, T-ADS, dans un cas où un UE capable de ICS ne prend pas en charge une T-ADS assistée par UE ou que c'est une politique d'opérateur de ne pas utiliser une T-ADS assistée par UE ;
dans lequel le réseau de communication traite l'appel vocal avec l'UE en utilisant le au moins un mécanisme de distribution vocale alternatif ;
dans lequel le mécanisme de distribution vocale alternatif comprend au moins un mécanisme de secours à commutation de circuits, CS, et un mécanisme VolP avec CS sur un système de paquets amélioré, EPS ; et
dans lequel le mécanisme VolP avec CS sur EPS comprend un mécanisme où des trames vocales sont délivrées en utilisant le domaine IMS et une signalisation CS est encapsulée dans un IP.
